# EUROPÄISCHE PATENTSCHRIFT

(11) **EP 3 225 101 B1**
(45) Veröffentlichungstag und Bekanntmachung des Hinweises auf die Patenterteilung: **30.08.2023**
(21) Anmeldenummer: 17401039.7
(22) Anmeldetag: 31.03.2017
(51) Int. Cl.: A01G 7/06

(54) **VORRICHTUNG UND VERFAHREN ZUM INJIZIEREN FLÜSSIGER WIRKSTOFFE IN DIE GEFÄSSBAHNEN VERHOLZTER PFLANZEN**
DEVICE AND METHOD FOR INJECTING LIQUID ACTIVE AGENTS INTO THE VESSELS OF WOODY PLANTS
DISPOSITIF ET PROCÉDÉ D'INJECTION DE MATIÈRES LIQUIDES DANS LES VAISSEAUX DE PLANTES LIGNIFIÉES

(30) Priorität: 31.03.2016 DE 102016105954
(43) Veröffentlichungstag der Anmeldung: 04.10.2017
(73) Patentinhaber: Seibert, Heinz, 76889 Barbelroth (DE); RLP AgroScience GmbH, 67435 Neustadt/Weinstrasse (DE)
(72) Erfinder: Seibert, Heinz, 76889 Barbelroth (DE); Pollatz, Thorsten, 76872 Winden (DE)
(74) Vertreter: Kurz, Andreas

(56) Entgegenhaltungen:
- CN-A- 102 440 120
- CN-B- 103 621 335
- US-A- 4 176 495
- US-A- 4 176 495

## Beschreibung

Die Erfindung betrifft eine Vorrichtung zum Injizieren von flüssigen Wirkstoffen in die Gefäßbahnen verholzter Pflanzen gemäß dem Oberbegriff des Patentanspruchs 1 und ein dementsprechendes Verfahren gemäß dem Oberbegriff des Patentanspruchs 17.

Derartige Vorrichtungen dienen in erster Linie dem Schutz von Pflanzen vor Schädlings- und Pilzbefall oder sonstigen Krankheiten, können jedoch auch zur Applikation von Pflanzenstärkungsmitteln eingesetzt werden. Vor allem im Bereich der Kulturpflanzen, wie zum Beispiel Obstbäume und Weinreben, kommt dem Pflanzenschutz eine große Bedeutung zu, da Qualität und Ertrag ohne geeignete Pflanzenschutzmaßnahmen nicht gewährleistet werden können.

In diesem Zusammenhang ist eine Applikation der Wirkstoffe durch Sprühen auf die zu behandelnden Pflanzen bekannt, womit jedoch nur eine äußerliche Behandlung der Pflanzen möglich ist. Krankheitskeime im Inneren der Pflanzen sind auf diese Weise nicht erreichbar. Hinzu kommt, dass mit dem Aufsprühen der Pflanzenschutzmittel eine toxikologische Belastung der Umwelt einhergeht, was schließlich dazu geführt hat, dass nach alternativen Möglichkeiten des Pflanzenschutzes geforscht worden ist. Hierzu zählt unter anderem das Applizieren von Wirkstoffen durch Injizieren in die Gefäßbahnen der Pflanzen selbst. Der Vorteil liegt in einer gezielten auf das Pflanzeninnere beschränkten Behandlung mit einer exakt dosierbaren Menge an Pflanzenschutzmittel, so dass toxikologische Stoffe nicht mehr in die Umwelt gelangen.

Zu diesem Zweck bekannte Vorrichtungen weisen ein mit Wirkstoff befülltes Reservoir und eine in den verholzten Bereich einer Pflanze eingebrachte Kanüle auf. Unter Ausnutzung des hydrostatischen Drucks oder mechanischer Druckerzeugungseinrichtungen wird die Kanüle mit dem Wirkstoff beschickt und der Wirkstoff im Weiteren in das Pflanzeninnere injiziert.

Da eine Verwendung solcher Vorrichtungen in der Regel fernab jeglicher Infrastruktur stattfindet, beispielsweise in landwirtschaftlich genutzten Gebieten wie Obstplantagen oder Weinbergen, ist es für den praktischen Einsatz vor Ort von Bedeutung, dass die Vorrichtungen mobil und robust sind und sich im Betrieb als zuverlässig und weitestgehend autark erweisen.

Aus der EP 0 111 254 ist eine Vorrichtung bekannt, bei der zur Injektion eine Kanüle mit Außengewinde in den Pflanzenstamm eingeschraubt wird. Auf dem äußeren Ende der Kanüle sitzt eine Zylinderkolbeneinheit, deren Kolben über eine Kolbenstange und damit verbundenen seitlichen Federn zur Erzeugung einer Vorschubkraft vorgespannt ist. Dadurch entsteht ein hydrostatischer Druck in der Zylinderkolbeneinheit, der das Injizieren des Wirkstoffes bewirkt.

Die US 3 992 813 offenbart eine Injektionsvorrichtung mit einem Druckbehälter, der teilweise mit dem zu injizierenden Wirkstoff und teilweise mit einem komprimierten Gas befüllt ist. Durch die damit erzeugte Vorspannung des Druckbehälters wird der notwendige Injektionsdruck erzeugt. Somit arbeitet diese Vorrichtungen zwar autark, birgt jedoch die Gefahr, dass bei nicht rechtzeitiger Beendigung der Injektion der Vorrat an Wirkstoff aufgebraucht ist und komprimierte Luft in die Gefäßbahnen der Pflanze gelangt mit der Folge einer Gefäßembolie.

In der DE 10 2006 018 993 A1 ist eine Vorrichtung mit einem Druckbehälter beschrieben, dessen Behälterinneres durch einen Kolben in eine erste Kammer zur Aufnahme des Wirkstoffs und eine zweite Kammer zur Aufnahme eines unter Druck stehenden Gases unterteilt ist. Der Gasdruck erzeugt dabei eine Vorschubkraft auf den Kolben, der den Wirkstoff in die Pflanze injiziert. Durch die bauliche Trennung von Wirkstoff und vorgespanntem Gas wird die Gefahr verringert, dass Luft in die Gefäßbahnen der Pflanze vordringen kann.

Den genannten Vorrichtungen ist gemein, dass sie bei ihrem Einsatz jeweils händisch von Pflanze zu Pflanze umgesetzt werden müssen. Vor allem wenn eine Vielzahl von Pflanzen zu behandeln ist, beeinträchtigt der damit verbundene Arbeitsaufwand den wirtschaftlichen Erfolg der Vorrichtungen.

Aus der US 4,176,495 ist außerdem eine Vorrichtung und ein Verfahren zum Injizieren chemischer Substanzen in den Stamm eines zu behandelnden Baumes bekannt, wobei mit Hilfe eines Bohrers ein Loch in den Stamm gebohrt wird. Im Zuge des Zurückziehens des Bohrers wird durch einen im Bohrer vorgesehenen Kanal das Bohrloch mit der chemischen Substanz befüllt. Dabei ist die Apparatur zum Positionieren und Antreiben des Bohrers sowie zum Injizieren der chemischen Substanz an einer mobilen Einheit angeordnet.

Die CN 103 621 335 B offenbart eine Vorrichtung zum Injizieren flüssiger Wirkstoffe in die Gefäßbahnen verholzter Pflanzen der eingangs genannten Art, Die Vorrichtung umfasst ein Fahrzeug, das an seiner Vorderseite mit einer vertikal und horizontal verstellbaren Injektionsvorrichtung ausgerüstet ist, die mit dem Fahrzeug in Fahrtrichtung an einen Stamm herangefahren wird. Nach erfolgtem Injizieren muss mit dem Fahrzeug zurückgestoßen werden, um anschließend den nächsten Stamm frontal anzufahren. Sowohl das Manövrieren des Fahrzeugs als auch die Bedienung der Injektionsvorrichtung wird von einem im Fahrzeug sitzenden Fahrzeugführer durchgeführt, was sich aufgrund des beträchtlichen Rangieraufwands und Arbeitseinsatzes des Fahrzeugsführers als sehr umständlich und unwirtschaftlich erweist.

Vor diesem Hintergrund besteht die Aufgabe der Erfindung darin, eine Vorrichtung und ein Verfahren zum Injizieren von Wirkstoffen in die Gefäßbahnen von verholzten Pflanzen anzugeben, die auch für eine gewerbliche Anwendung in großem Maßstab geeignet sind, also auch zur sukzessiven Behandlung einer großen Anzahl von Pflanzen.

Diese Aufgabe wird durch eine Vorrichtung mit den Merkmalen des Patentanspruchs 1 sowie ein Verfahren mit den Merkmalen des Patentanspruchs 17 gelöst.

Vorteile Ausführungsformen ergeben sich aus den Unteransprüchen.

Die Erfindung beruht auf dem Grundgedanken, das Injizieren eines Wirkstoffs in die Gefäßbahnen von Pflanzen derart weiter zu entwickeln, dass eine Anwendung nicht nur auf einzelne ausgewählte Pflanzen beschränkt ist, sondern auch in großtechnischem Umfang bei einer Vielzahl von Pflanzen möglich ist, beispielsweise in Obstplantagen oder im Weinbau.

In einer einfachen Ausführungsform sieht die Erfindung hierzu vor, eine Injektionseinheit mittels einer fahrbaren Einheit von Pflanze zu Pflanze umzusetzen, wobei die Injektionseinheit zur Durchführung einer Injektion jeweils mit Hilfe von Verstellmitteln von einer ersten Position in eine zweite Position und zurück wechselt. In der ersten Position ist die Injektionseinheit für das Umsetzen zur nächsten Pflanze in eine Ruhestellung gefahren, in der die Injektionseinheit von der Pflanze gelöst und gegenüber der Pflanze zurückgefahren ist. In der zweiten Position ist die Injektionseinheit an die Pflanze herangefahren und steht mit dieser für den Vorgang des Injizierens in Wirkverbindung. Vorzugsweise ist die Injektionseinheit in der zweiten Position gegenüber der Pflanze fixiert, beispielsweise durch Erzeugung einer Klemmung.

Bei der Durchführung der Injektion ist es zudem möglich weitere Maßnahmen zum Schutze der Pflanze durchzuführen. So kann beispielsweise vor der Injektion der Bereich, wo die Injektionsnadel in den Stamm eindringt, mit einem Desinfektionsmittel besprüht werden und/oder nach der Injektion dieser Bereich mit einer Schutzschicht, zum Beispiel einem Wachs, versiegelt werden.

Die Verstellmittel werden gemäß der Erfindung it Hilfe einer Steuerungseinheit bedient. Dabei wird die lokale Position der zu behandelnden Pflanze gegenüber der fahrbaren Einheit mittels Sensoren wie zum Beispiel mittels Radar, Licht- oder Schallwellen, oder optischer Bilderfassungs- und -auswertsysteme, ermittelt, die fahrbare Einheit bei geeigneter Position gegenüber der Pflanze selbsttätig gestoppt, die Verstellmittel aktiviert, um die Injektionseinheit in die zweite Position zu bringen, die Injektion ausgeführt und anschließend die Injektionseinheit wieder in die erste Position gebracht und zur nächsten Pflanze umgesetzt. Ein Fahrzeugführer ist bei einer vollautomatischen Steuerung der fahrbaren Einheit, gegebenenfalls mit GPS-Unterstützung, entbehrlich oder hat hierbei lediglich Lenk- und Kontrollfunktion.

Die Injektionseinheit ist vorzugsweise am Ende eines Injektionsarms angeordnet, der mit seinem gegenüberliegenden Ende mittelbar oder unmittelbar an der fahrbaren Einheit befestigt ist, und die Verstellmittel einen Positionswechsel der Injektionseinheit zwischen erster Position und zweiter Position ausführen. Als vorteilhaft hat sich in diesem Zusammenhang ein zwei- oder mehrteiliger Injektionsarm erwiesen, dessen Teile mit Hilfe der Verstellmittel ineinander einschiebbar oder gegeneinander verschwenkbar sind. Der Injektionsarm kann also nach Art eines Teleskoparms, Gelenkarms, Scherenarms oder dergleichen ausgebildet sein. Auf diese Weise ist eine schnelle und exakte Positionierung der Injektionseinheit gegenüber der zu behandelnden Pflanze ausführbar. Die dafür erforderlichen Verstellmittel sind vorzugsweise hydraulisch oder elektromechanisch betrieben, wie es zum Beispiel bei Zylinderkolbeneinheiten, Spindeltrieben oder Zahnsriemen- und Zahnstangenantrieben der Fall ist.

Es ist auch möglich, zwei Injektionsarme an der fahrbaren Einheit vorzusehen, beispielsweise an jeder Längsseite einer. Auf diese Weise kann sich eine erfindungsgemäße fahrbare Einheit zwischen zwei parallelen Pflanzenreihen bewegen und jeweils zwei Pflanzen gleichzeitig injizieren.

Gemäß der Erfindung ist die Injektionsnadel an einem angetriebenen Eindrückarm oder einem linear beschleunigbaren Injektionsbolzen angeordnet. Während bei einer Ausführungsform mit Eindrückarm ein kontrolliertes Eindrücken der Injektionsnadel bei gleichzeitiger Fixierung der Pflanze möglich ist, ermöglicht ein Injektionsbolzen ein "Einschießen" der Injektionsnadel in die Pflanze, was unter Umständen ein Fixieren der Pflanze aufgrund deren Massenträgheit entbehrlich macht.

Bei beiden Ausführungsformen kann der Injektionsarm eine oder mehrere Düsen aufweisen, deren Mündung jeweils auf den Bereich der Injektionsstelle gerichtet ist und die jeweils über Leitungen und Pumpen an einen Vorratsbehälter für ein Desinfektionsmittel bzw. eine Schutzflüssigkeit wie zum Beispiel ein Wachs angeschlossen sind. Damit lässt sich bei geeigneter Steuerung der Vorrichtung vor der Injektion ein Desinfektionsmittel und/oder nach der Injektion eine Schutzschicht oder eine Versiegelung auf die Injektionsstelle aufbringen.

Vorzugsweise verfügt eine erfindungsgemäße Vorrichtung über eine Klemmvorrichtung zur Fixierung der Pflanze gegenüber der Injektionseinheit während der Injektion. Dadurch wird eine Injektion an vorbestimmter Stelle und Tiefe gewährleistet. Zudem wird die Gefahr minimiert, dass die Injektionsnadel aufgrund von Relativbewegungen der Pflanze gegenüber der Injektionseinheit Biege- und Scherkräften ausgesetzt ist und bricht. In Fortbildung dieses Gedankens besitzt die Klemmvorrichtung mehrere betätigbare Klemmflächen, die über Synchronisationsmittel so gesteuert sind, dass der Stamm der Pflanze stets im Zentrum der von den Klemmflächen gebildeten Aufnahme liegt. Die Injektionsnadel kann auf diese Weise für den Injektionsvorgang besonders exakt positioniert werden.

In einer vorteilhaften Weiterbildung der Erfindung ist bei einer erfindungsgemäßen Vorrichtung die Injektionseinheit mittels einer Lineareinheit an der fahrbaren Einheit befestigt. Eine solche Ausführungsform der Erfindung gestattet es, die Injektionseinheit entlang der Linearführung und damit entlang der fahrbaren Einheit zu bewegen. So wird es dadurch möglich, die fahrbarer Einheit kontinuierlich, also ohne anzuhalten, entlang einer Pflanzenreihe zu steuern, während die Injektionseinheit in einer in Fahrtrichtung vorderen Position an der Linearführung von der ersten Position in die zweite Position wechselt, und - während die Injektion mit dem Wirkstoff erfolgt - entlang der Linearführung in eine hintere Position an der Linearführung gebracht wird, sich also während der Injektion relativ zur fahrbaren Einheit mit deren Geschwindigkeit aber entgegen deren Fahrtrichtung bewegt. Nach erfolgter Injektion wechselt die Injektionseinheit aus der zweiten Position zurück in die erste Position und wird für den nächsten Injektionsvorgang entlang der Linearführung erneut in die vordere Position gefahren. Auch bei dieser Ausführungsform der Erfindung kann die fahrbare Einheit von einem Fahrzeugführer gesteuert sein oder sich ohne Fahrer autonom entlang einer Pflanzenreihe bewegen.

Da aufgrund der Beschaffenheit des Untergrunds Kippbewegungen der fahrbaren Einheit vor allem um deren Längsachse gegenüber den zu behandelnden Pflanzen nicht auszuschließen sind, sieht eine weiter bevorzugte Ausführungsform der Erfindung einen Ausgleichsmechanismus zwischen fahrbarer Einheit und Injektionseinheit vor, mit dem die Injektionseinheit von den Bewegungen der fahrbaren Einheit weitestgehend entkoppelt ist. Vorzugsweise umfasst dieser Ausgleichsmechanismus einen Tragrahmen für die Injektionseinheit, der mit seinem in Fahrtrichtung vorderen Ende gelenkig an die fahrbare Einheit anschließt und dessen hinteres Ende eine Stützrad aufweist, mit dem der Tragrahmen am Untergrund abrollt. Der Tragrahmen kann dabei zur unmittelbaren Montage der Injektionseinheit bzw. deren Injektionsarm dienen. Bei Ausführungsformen mit Linearführung kann die Linearführung selbst den Tragrahmen bilden.

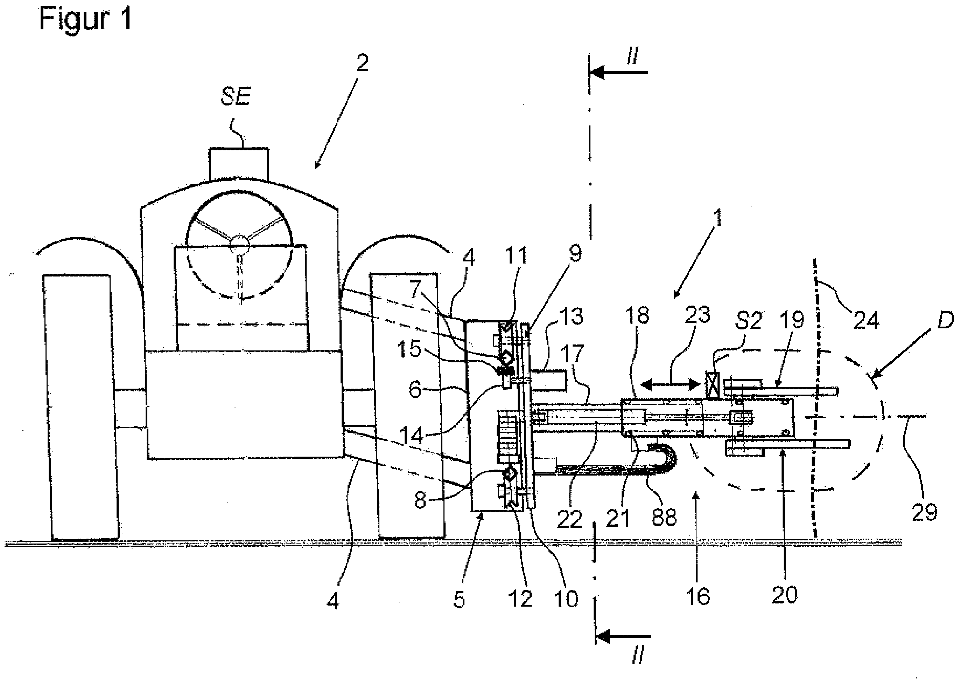

Die Erfindung wird nachfolgend anhand in den Zeichnungen dargestellter Ausführungsbeispiele näher erläutert, wobei weitere Merkmale und Vorteile der Erfindung offenbar werden, ohne die Erfindung jedoch darauf zu beschränken. Gleiche oder funktionsgleiche Merkmale der in den Fig. 1 bis 11 gezeigten Ausführungsformen tragen dabei gleichlautende Bezugszeichen, soweit dies zum leichteren Verständnis der Erfindung beiträgt.

Es zeigt
- Fig. 1: eine Seitenansicht auf eine erfindungsgemäße Vorrichtung,
- Fig. 2: eine Schnitt durch die in Fig. 1 dargestellte Vorrichtung entlang der dortigen Linie II - II,
- Fig. 3: eine Unteransicht auf eine erfindungsgemäße Klemmvorrichtung in dem in Fig. 1 mit D gekennzeichneten Bereich,
- Fig. 4: einen Schnitt durch die in Fig. 3 dargestellte Klemmvorrichtung entlang der dortigen Linie IV - IV,
- Fig. 5: einen Schnitt durch die in Fig. 3 dargestellte Klemmvorrichtung entlang der dortigen Linie V - V,
- Fig. 6: eine Draufsicht auf eine erfindungsgemäße Injektionsvorrichtung in dem in Fig. 1 mit D gekennzeichneten Bereich,
- Fig. 7: einen Schnitt durch die in Fig. 6 dargestellte Injektionsvorrichtung entlang der dortigen Linie VII - VII,
- Fig. 8: einen Schnitt durch eine alternative Ausführungsform einer Injektionsvorrichtung zur Anordnung in dem in Fig. 1 mit D gekennzeichneten Bereich,
- Fig. 9: eine Draufsicht auf eine weitere Ausführungsform einer erfindungsgemäßen Vorrichtung in schematischer Darstellung,
- Fig. 10: eine Draufsicht auf eine zusätzliche Ausführungsform einer erfindungsgemäßen Vorrichtung, und
- Fig. 11: eine Ansicht auf die in Fig. 10 dargestellte Vorrichtung.

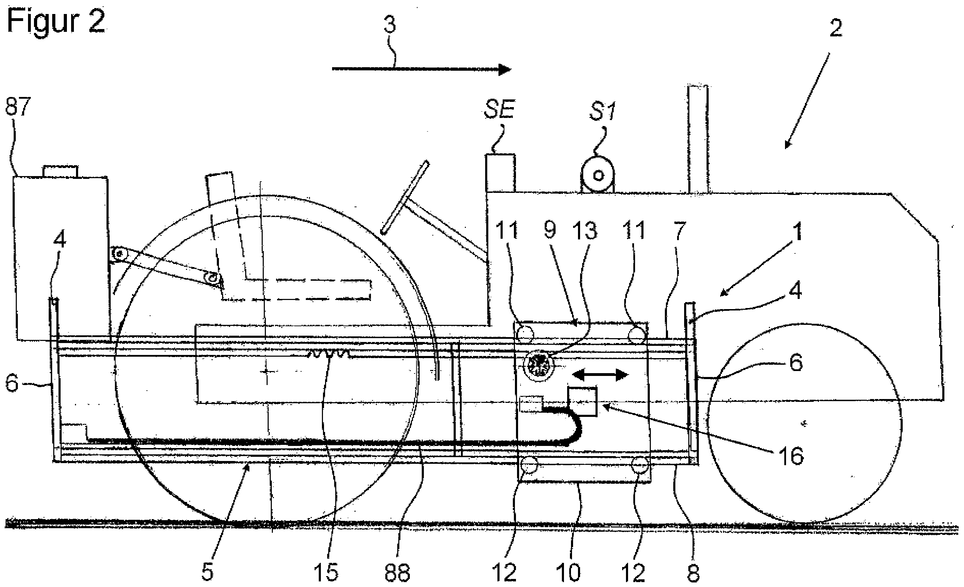

Die Fig. 1 und 2 geben einen Überblick über eine erfindungsgemäße Vorrichtung 1, die im vorliegenden Fall an einem Traktor als fahrbare Einheit 2 montiert ist, deren Fahrtrichtung in Fig. 2 mit 3 angegeben ist. Zum Zwecke der Montage sind an einer Seite der fahrbaren Einheit 2 Streben 4 befestigt, deren Enden einen Tragrahmen 5 im lichten Abstand zur fahrbaren Einheit 2 halten. Der Tragrahmen 5 besitzt zwei in Fahrtrichtung 3 beabstandete, vertikal verlaufende Wangen 6, die über eine obere Laufschiene 7 und eine dazu parallel verlaufende untere Laufschiene 8 verbunden und gegebenenfalls mittels mehrere Zwischenstützen in achsparalleler Lage gehalten sind. Der Tragrahmen 5 mit den Laufschienen 7, 8 bildet dabei den stationären Teil einer in Fahrtrichtung 3 wirksamen Linearführung.

Der bewegliche Teil der Linearführung umfasst als Läufer einen Laufwagen 9, mit einer zur Ebene des Tragrahmens 5 planparallelen Grundplatte 10, an deren dem Tragrahmen 5 zugewandten Rückseite ein oberes Paar Prismenrollen 11 und ein unteres Paar Prismenrollen 12 derart gelagert sind, dass die Prismenrollen 11 auf der Oberseite der Laufschiene 7 abrollen und die Prismenrollen 12 auf der Unterseite der Laufschiene 8. Durch komplementär geformte Laufflächen an den Prismenrollen 11, 12 und Laufschienen 7, 8 wird eine Zwangsführung des Laufwagens 9 erreicht.

Für den Antrieb des Laufwagens 9 ist an der Vorderseite der Grundplatte 10 ein Motor 13 befestigt, dessen Antriebswelle sich durch die Grundplatte hindurch erstreckt und mit dem Überstand an der Rückseite ein Antriebsritzel 14 trägt. Die Zähne des Ritzels 14 greifen in die Zähne einer Zahnstange 15, die parallel zu den Laufschienen 7, 8 am Tragrahmen 5 befestigt ist. Im vorliegenden Ausführungsbeispiel ist die Zahnstange 15 über ihre Länge starr an der Unterseite der oberen Laufschiene 7 befestigt. Durch entsprechende Ansteuerung des Motors 13 kann der Laufwagen 9 in oder entgegen der Fahrtrichtung 3 bewegt werden oder der Antrieb kann kraftlos geschaltet werden, um eine freie Beweglichkeit des Laufwagens 9 entlang der Linearführung zu erzielen.

Am Laufwagens 9 ist quer zur Ebene des Tragrahmens 5 ein frei auskragender Injektionsarm 16 angeschlossen. Der Injektionsarm 16 umfasst im vorliegenden Ausführungsbeispiel ein hohlzylindrisches erstes Armteil 17, das biegesteif mit der Vorderseite der Grundplatte 10 verbunden ist, und ein hohlzylindrisches zweites Armteil 18, an dessen freiem Ende sowohl eine Injektionseinheit 19 als auch Klemmeinheit 20 angeordnet sind. Mittels Gleit- oder Wälzlager 21 ist das erste Armteil 17 teleskopartig in das zweite Armteil 18 einschiebbar, wodurch die Länge des Injektionsarms 16 einstellbar ist. Auf diese Weise können Injektionseinheit 19 und Klemmeinheit 20 quer zur Fahrtrichtung 3 vor und zurück bewegt werden.

Als Verstellmittel zum Teleskopieren dient ein Linearantrieb, beispielsweise eine Zylinderkolbeneinheit 22, die innerhalb der hohlzylindrischen Armteile 17, 18 angeordnet ist und deren ortsfester Zylinder an der Vorderseite der Grundplatte 10 angelenkt ist und deren beweglicher Kolben an einen mit dem zweiten Armteil 18 verbundenen Lagerbock anschließt. Durch Aktivieren der Zylinderkolbeneinheit 22 ist das zweite Armteil 18 auf dem ersten Armteil 17 linear verstellbar, was durch den Doppelpfeil 23 verdeutlicht ist.

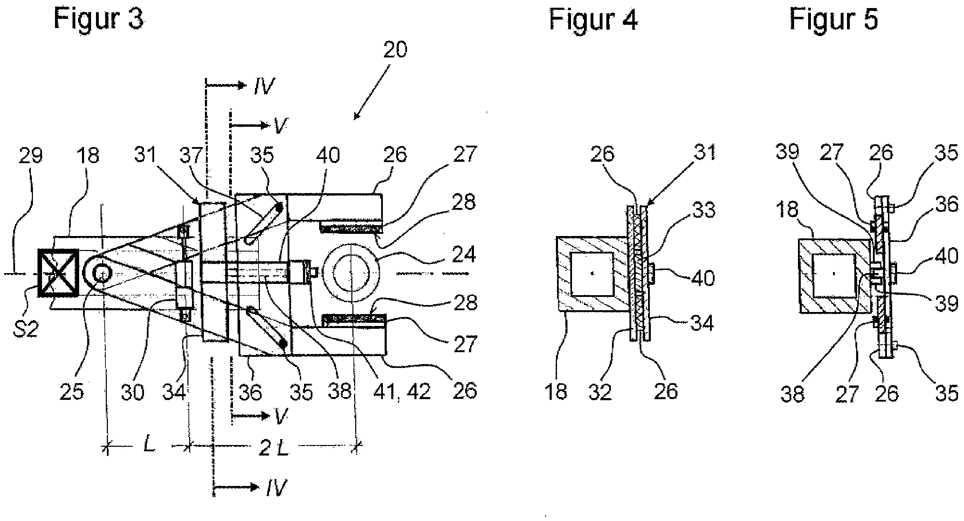

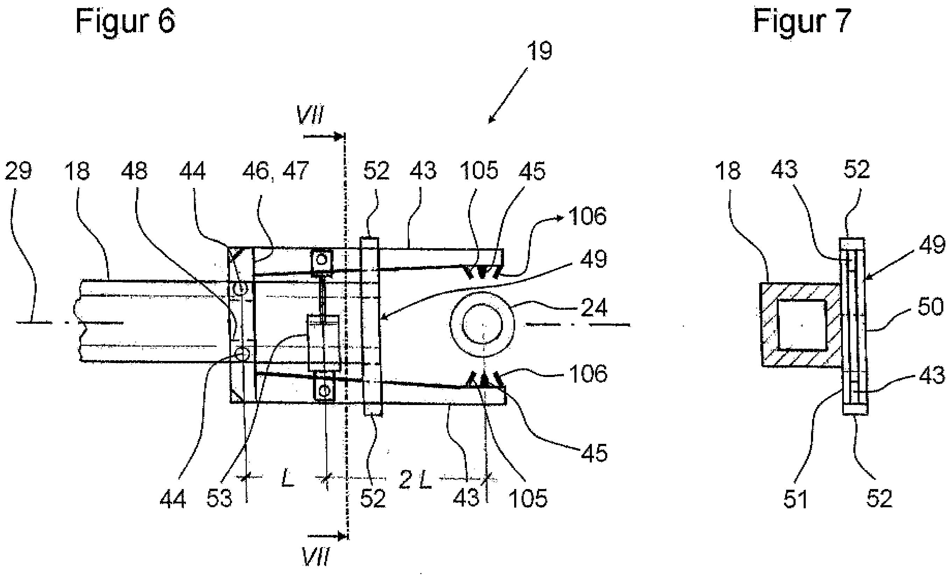

Im vorliegenden Ausführungsbeispiel besitzen sowohl erstes Armteil 17 als auch zweites Armteil 18 einen rechteckförmigen Querschnitt, wobei die plane Unterseite des zweiten Armteils 18 eine Montagefläche zur Befestigung der Klemmeinheit 20 gemäß der Fig. 3 bis 5 bereitstellt und die plane Oberseite des zweiten Armteils 18 eine Montagefläche zur Befestigung der Injektionseinheit 19 gemäß der Fig. 6 bis 8.

Die in den Fig. 1, 3, 4 und 5 dargestellte Klemmeinheit 20 dient der exakten Positionierung und Fixierung von Injektionseinheit 19 und zu behandelnder Pflanze 24 in einer vorbestimmten relativen Lage zueinander, um ein Injizieren in die Gefäßbahnen präzise und zuverlässig vornehmen zu können.

Zur Befestigung der Klemmeinheit 20 weist das zweite Armteil 18 des Injektionsarms 16 ein Schwenklager 25 mit einem aufrecht stehenden Lagerbolzen auf, auf welchen zwei Zentrierarme 26 mit ihrem einen Ende aufgesteckt und schwenkbar gelagert sind. Die anderen Enden der Zentrierarme 26 sind dazu bestimmt, in Kontakt mit der Pflanze 24 gebracht zu werden und weisen zu diesem Zweck Klemmklötze 27 mit einer rutschhemmend ausgerüsteten Klemmfläche 28 auf. Ausgehend vom Schwenklager 25 divergieren die beiden Zentrierarme 26 über einen ersten Längsabschnitt V-förmig und symmetrisch zur Längsachse 29 des Injektionsarms 19, bevor sie in etwa parallel zur Längsachse 29 verlaufende Endabschnitte übergehen, an denen die Klemmklötze 27 angeordnet sind.

Mittels eines Aktors 30 in Form einer Zylinderkolbeneinheit, der mit seinen Enden gelenkig mit den ersten Längsabschnitten der beiden Zentrierarme 26 verbunden ist, lassen sich die Zentrierarme 26 um die Lagerachse schwenken, wobei die Endabschnitte mit den Klemmklötzen 27 öffnen bzw. schließen. Dabei sind die beiden Zentrierarme 26 während der Schwenkbewegung in einer quer zur Längsachse 29 ausgerichteten Führung 31 nach oben und unten gehalten. Zur Führung 31 gehört eine obere Führungsleiste 32, die mit der Unterseite des ersten Armteils 17 verbunden ist, und eine dazu von einem mittig angeordneten Distanzstück 33 im lichten Abstand deckungsgleich gehaltene untere Führungsleiste 34, die zu beiden Seiten der Längsachse 29 jeweils einen nach außen offenen Führungsschlitz formen, in dem jeweils ein Zentrierarm 26 aufgenommen ist (Fig. 3 und 4).

Wie insbesondere aus den Fig. 3 und 5 ersichtlich verfügt die Klemmeinheit 20 zusätzlich über Synchronisationsmittel, die beim Schließen der Klemmeinheit 20 dafür sorgen, dass die Pflanze 24 symmetrisch von den beiden Zentrierarmen 26 erfasst wird. Die Synchronisationsmittel umfassen zwei Führungszapfen 35, von denen jeweils einer im Übergangsbereich zwischen erstem Längsabschnitt und Endabschnitt eines Zentrierarms 26 aus dessen Unterseite hervorsteht.

Ferner umfassen die Synchronisationsmittel eine Zentrierplatte 36, die sich unterhalb der Zentrierarme 26 quer zur Längsachse 29 erstreckt und mit ihren Enden jeweils mit einem Zentrierarm 26 überlappt. Im Überlappungsbereich weist die Zentrierplatte 36 jeweils ein Langloch 37 auf, das von der vorderen äußeren Ecke ausgehend im Winkel von 45 Grad nach innen verläuft. In das Langloch 37 greift jeweils ein Führungszapfen 35, was bewirkt, dass sich die Zentrierplatte 36 bei Schließen der Zentrierarme 26 nach vorne in Richtung der Pflanze 24 bewegt bzw. beim Öffnen der Zentrierarme 26 nach hinten in Richtung des Schwenklagers 25.

Um eine zur Längsachse 29 symmetrische Bewegung der Zentrierplatte 36 zu gewährleisten, weist die Zentrierplatte 36 an ihrer dem zweiten Armteil 18 zugewandten Oberseite einen zur Längsachse 29 parallel verlaufenden Steg 38 auf. Der Steg 38 greift in eine an der Unterseite des zweiten Armteils 18 ebenfalls achsparallel verlaufende von Nutleisten 39 gebildete Führungsnut, die eine in Richtung der Längsachse 29 lineare Bewegung vorgibt. Nach unten ist die Zentrierplatte 36 von einer Deckleiste 40 gehalten, die starr an der unteren Führungsleiste 34 befestigt ist und sich parallel zur Längsachse 29 über die Breite der Zentrierplatte 36 erstreckt.

An ihrem den Klemmflächen 28 zugewandten Rand weist die Zentrierplatte 36 mittig einen parallel zur Längsachse 29 ausgerichteten dritten Zentrierarm 41 mit Klemmfläche 42 auf (Fig. 3). Der dritte Zentrierarm 41 bewegt sich also mit der Zentrierplatte 36, wobei durch die vorbeschriebenen Synchronisationsmittel gewährleistet ist, dass alle Klemmflächen 28, 42 in jeder Schwenkposition einen identischen Abstand zum Zentrum der Aufnahme für die Pflanze 24 aufweisen.

An der Oberseite des zweiten Armteils 18, der Klemmeinheit 20 vertikal gegenüberliegend sieht man die zangenartig ausgebildete Injektionseinheit 19, deren näherer Aufbau sich vor allem aus den Fig. 6 und 7 erschließt. Die Injektionseinheit 19 besitzt zwei sich symmetrisch zur Längsachse 29 gegenüberliegende Injektionsarme 43, deren abgewinkelte Enden jeweils in einem Schwenklager 44 an der Oberseite des zweiten Armteils 18 drehbar gelagert sind und an deren gegenüberliegenden Enden einander zugewandte Injektionsnadeln 45 angeordnet sind.

Die beiden Schwenklager 44 sind zur Führung der Injektionsarme 43 während ihrer Schwenkbewegung über eine obere Führungsplatte 46 und untere Führungsplatte 47 verbunden, wobei die untere Führungsplatte 47 starr mit dem zweiten Armteil 18 verbunden ist. Ein zwischen den Führungsplatten 46, 47 mittig angeordnetes Distanzstück 48 stellt dabei einen lichten Abstand zwischen den Führungsplatten 46, 47 her, der der Dicke der Injektionsarme 43 entspricht. Den auf diese Weise geschaffenen Führungsschlitz quert ein Lagerbolzen, an dem ein Eindrückarm 43 angelenkt ist.

Eine zweite Führung 49 für die Injektionsarme 43 ist etwa in der Mitte zwischen den Schwenklagern 44 und den Injektionsnadeln 45 positioniert. Insbesondere aus Fig. 7 geht hervor, dass die zweite Führung 49 eine zweite obere Führungsplatte 50 und zweite untere Führungsplatte 51 aufweist, wobei letztere starr am zweiten Armteil 18 befestigt ist. Die beiden zweiten Führungsplatten 50 und 51 liegen im lichten Abstand deckungsgleich übereinander und bilden auf diese Weise einen Führungsschlitz. Die Enden der zweiten Führungsplatten 50, 51 sind mittels Anschlagelementen 52 miteinander verbunden, die einerseits den lichten Abstand der zweiten Führungsplatten 50, 51 vorgeben und andererseits die Schwenkbewegung der Injektionsarme 43 nach außen begrenzen.

Zur Betätigung der Injektionsarme 43 ist in dem Bereich zwischen den Schwenklagern 25 und der zweiten Führung 49 ein Aktor 53 angeordnet. Der Aktor 53 besteht im vorliegenden Ausführungsbeispiel aus einer hydraulisch angetriebenen Zylinderkolbeneinheit, deren Enden an die beiden Injektionsarme 43 angelenkt sind. Durch Betätigen des Aktors 53 können die mit den Injektionsnadeln 45 ausgestatteten Enden der Injektionsarme 43 aufeinander zugeschwenkt werden, wobei die Injektionsnadeln 45 in die Gefäßbahnen der Pflanze 24 eindringen oder zum Öffnen der Injektionseinheit 19 aufgeschwenkt werden.

Aus Fig. 6 geht zudem hervor, dass jeder Injektionsarm 43 eine erste Düse 105 und eine zweite Düse 106 aufweist, die benachbart zur Injektionsnadel 45 an der Innenseite eines Injektionsarms 43 befestigt sind und deren freie Düsenöffnung auf die Injektionsstelle ausgerichtet ist. Die ersten Düsen 105 sind über Schlauchleitungen an einen Behälter mit einer Desinfektionsflüssigkeit angeschlossen und über eine Pumpe mit Druck beaufschlagbar, so dass die Injektionsstelle mit der Desinfektionsflüssigkeit besprüht werden kann. Die zweiten Düsen 106 sind über Schlauchleitungen an einen Behälter mit einer Schutzflüssigkeit angeschlossen, zum Beispiel einem Wachs, einem Lack oder einer Versiegelung, und ebenfalls über eine Pumpe mit Druck beaufschlagbar, so dass die Injektionsstelle mit der Schutzflüssigkeit besprüht werden kann.

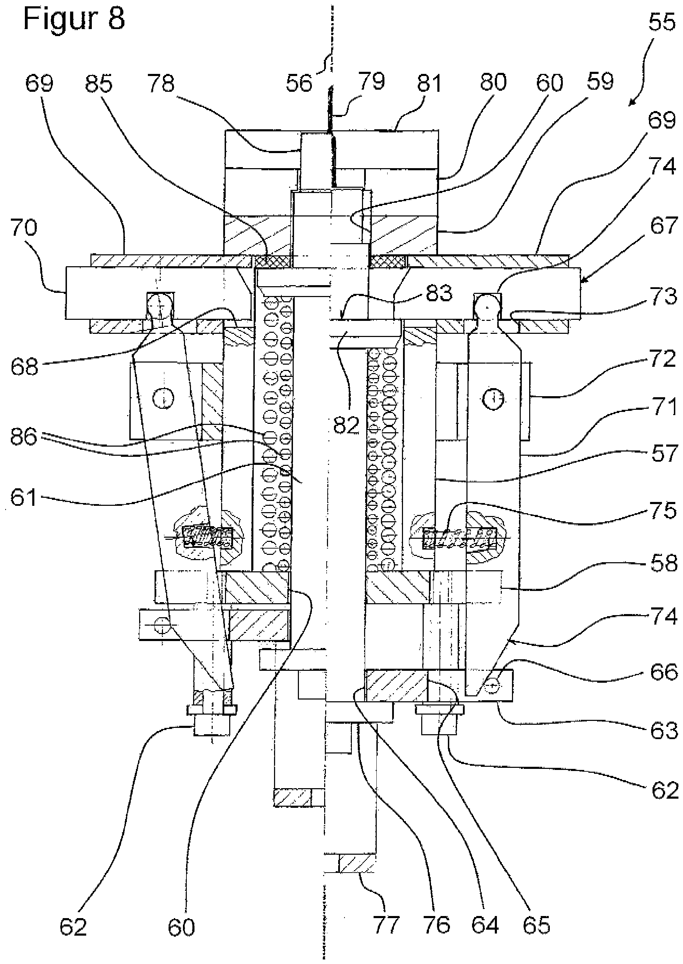

Während bei der Injektionseinheit 19 gemäß der Fig. 6 und 7 die Injektionsnadeln 45 durch Aufbringung einer anhaltenden Kraft in die Pflanze 24 eingedrückt werden, sieht eine dazu alternative Ausführungsform vor, eine Injektionsnadel in die Pflanze einzuschießen. Eine solche Injektionseinheit 55 ist Gegenstand von Fig. 8, wobei die linke Hälfte der Darstellung die Injektionseinheit 55 während der Injektion zeigt, die rechte Hälfte hingegen den Zustand vor der Injektion.

Die Injektionseinheit 55 besitzt ein sich entlang einer Achse 56 erstreckendes hohlzylindrisches Gehäuse 57, das an dem hinteren Ende mit einer Deckplatte 58 verschlossen ist und an dem vorderen Ende mit einer Stirnplatte 59. Sowohl Deckplatte 58 als auch Stirnplatte 59 weisen jeweils eine zur Achse 56 konzentrische Öffnung 60 auf, die zur Aufnahme und Führung eines das Gehäuse 57 koaxial durchdringenden Schlagbolzen 61 dienen. Die Deckplatte 58 erstreckt sich in radialer Richtung bezogen auf die Achse 56 über das Gehäuse 57 hinaus, wobei im Bereich des Überstands zwei Führungsstifte 62 in diametraler Position zueinander achsparallel nach hinten abstehen. Auf den Führungsstiften 62 ist eine Spann- und Auslöseplatte 63 axial verschieblich gelagert, die eine mit den Öffnungen 60 axial fluchtende Öffnung 64 besitzt, welche ebenfalls vom Schlagbolzen 61 durchsetzt ist. Im Umfangsbereich weist die Spann- und Auslöseplatte 63 zwei sich diametral gegenüberliegende Radialschlitze 65 auf, die von einem Zylinderstift 66 gequert sind, der wie nachfolgend noch erläutert wird, mit einem Riegelmechanismus 67 zusammenwirkt.

Angrenzend an die Stirnplatte 59 weist das Gehäuse 57 zwei sich diametral gegenüberliegende Öffnungen 68 auf, in die radial verlaufende hohlzylindrische Führungsböcke 69 eingesetzt sind.

Der Riegelmechanismus 67 umfasst zwei stabförmige Riegel 70, die in den Führungsböcken 69 radial verschieblich gelagert sind und dabei von einer Verriegelungsposition (Fig. 8, rechte Hälfte), in der der Riegel 70 über die Innenwandung des Gehäuses 57 übersteht, in eine Entriegelungsposition (Fig. 8, linke Hälfte) bringbar sind, in der der Riegel 70 hinter die Innenwandung zurücktritt.

Die Betätigung der Riegel 70 erfolgt über axial ausgerichtete Steuerhebel 71, die schwenkbar in Lagerböcken 72 am Außenumfang des Gehäuses 57 gehalten sind. Das auf der vorderen Seite eines Lagerbocks 72 liegende Ende der Steuerhebel 71 ist als Kugelkopf ausgebildet und erstreckt sich jeweils durch einen Schlitz 73 am Führungsblock 69 in eine sacklochartige Vertiefung 74 im Riegel 70. Das gegenüberliegende Ende der Steuerhebel 71 endet im Bereich der Spann- und Auslöseplatte 63, wo es eine Schräge 74 aufweist, die mit dem Zylinderstift 66 zusammenwirkt. Zwischen Gehäuse 57 und Steuerhebel 71 wirkende Druckfedern 75 spannen dabei die Steuerhebel 71 gegen die Zylinderstifte 66. Durch axiales Verschieben der Spann- und Auslöseplatte 63 entlang der Führungsstifte 62 gleiten die Zylinderstifte 66 entlang der Schrägen 74, wodurch eine Drehbewegung der Steuerungshebel 71 um die Lagerböcke 72 erreicht wird. Über die Kugelköpfe der Steuerhebel 71 wird diese Drehbewegung in eine radial gerichtete Linearbewegung der Riegel 70 umgewandelt.

Der Schlagbolzen 61 weist im Wesentlichen zylindrische Gestalt auf und ist in Richtung der Achse 56 verschieblich im Gehäuse 57 gelagert. Das rückwärtige Ende des Schlagbolzens 61 durchdringt die Spann- und Auslöseplatte 63 und weist dort eine die Öffnung 64 der Spann- und Auslöseplatte 63 hintergreifende Spannscheibe 76 auf. An diesem Ende ist zudem ein Anschlussbügel 77 angeordnet, der zum Spannen der Injektionseinheit 55 mit einer nicht weiter dargstellten Spanneinrichtung, beispielsweise einer hydraulisch arbeitenden Zylinderkolbeneinheit, gekoppelt werden kann.

Auf dem gegenüberliegenden vorderen Ende des Schlagbolzens 61 sitzt ein zylindrischer Nadelhalter 78, in den die Injektionsnadel 79 koaxial eingesetzt ist. Um ein Verdrehen des Nadelhalters 78 beim Spannen der Injektionseinheit 55 zu verhindern, ist auf die Stirnplatte 59 eine Führungsleiste 80 aufgesetzt, auf der wiederum eine Anschlagplatte 81 zum Anlegen der Injektionseinheit 55 an eine Pflanze 24 angeordnet ist.

Der im Gehäuseinneren verlaufende Abschnitt des Schlagbolzens 61 weist im Bereich der Riegel 70 einen umlaufenden Bund 82 auf, deren in Richtung der Injektionsnadel 79 zeigende Vorderseite 83 eine mit den Riegeln 70 in Verriegelungsposition zusammenwirkende Riegelfläche bildet und die in Entriegelungsposition als Anschlagfläche dient, mit der die Bewegung des Schlagbolzens 61 an einem Dämpfungselement 85 an der Innenseite der Stirnplatte 59 gestoppt wird.

In dem Bereich zwischen Bund 82 und Deckplatte 58 ist der Schlagbolzen 61 von zwei Druckfedern 86 umgeben, die gegen die Deckplatte 58 und den Bund 82 vorgespannt sind. Durch deren Federkraft wird der Schlagbolzen 61 in jeder Position nach vorne in Richtung der Injektionsnadel 79 gespannt.

Die für den Betrieb einer erfindungsgemäßen Vorrichtung 1 erforderlichen Steuerungskomponenten umfassen vor allem eine elektronische Steuerungseinheit SE und mit dieser über Funk oder Datenleitungen verbundene Sensoreinheiten S1 und S2. Die Steuerungseinheit SE empfängt dabei die von den Sensoreinheiten S1 und S2 erzeugen Signale, verarbeitet diese und gibt dann Steuerungssignale an die betreffenden Steuerungsorgane aus, wie zum Beispiel den Antrieb 13 für den Laufwagen 9, die Vorschubeinrichtung für den Injektionsarm 16, die Aktoren 30 und 53 für die Klemmeinheit 20 und Injektionseinheit 19. Die Steuerungseinheit SE und/oder die Sensoreinheiten S1 können an der fahrbaren Einheit 2 oder dem Tragrahmen 5 montiert sein (Fig. 1 und 2), die Sensoreinheit S2 am Injektionsarm 16 (Fig. 3).

Die Sensoreinheit S1 dient der Erkennung der relativen Lage der Pflanze 24 zur Klemmeinheit 20 bzw. Injektionseinheit 19 in Fahrtrichtung 3. Als Sensoreinheit S1 ist beispielsweise eine optische Bilderfassungseinrichtung geeignet wie zum Beispiel eine Kamera, aber auch Licht- und Schallsensoren. Die Sensoreinheit S2 erfasst die relative Lage der Pflanze 24 zur Klemmeinheit 20 bzw. Injektionseinheit 19 quer zur Fahrtrichtung 3 in Richtung des Injektionsarms 16. Hierfür geeigent sind beispielsweise Kontaktschalter, Licht- oder Schallsensoren.

Darüber hinaus besitzt eine erfindungsgemäße Vorrichtung 1 Komponenten zur Versorgung des Antriebs 13 mit elektrischer Energie, zur Versorgung der Vorschubeinrichtung und der Aktoren 30 und 53 mit einem Druckmedium sowie zur Beaufschlagung der Injektionsnadeln 45 und 79 mit einem Wirkstoff aus einem Vorratsbehälter 87. Die dafür erforderlichen Leitungen sind innerhalb von Energieketten 88 geführt.

Im Betrieb arbeitet eine erfindungsgemäße Vorrichtung 1 zyklisch, wobei ein Arbeitszyklus das Nachstellen der Vorrichtung von einer Pflanze 24 zur nächsten und die Injektion des Wirkstoffes in die Gefäßbahnen der Pflanze 24 umfasst. Zu Beginn eines Zyklus bewegt sich die fahrbare Einheit 2 mit konstanter Geschwindigkeit entlang einer Reihe von Kulturpflanzen 24, die behandelt werden sollen. Dabei befindet sich der Laufwagen 9 und somit der Injektionsarm 16 in einer in Fahrtrichtung 3 vorderen Position am Tragrahmen 5. Der Injektionsarm 16 ist mittels der Zylinderkolbeneinheit 22 eingefahren, das heißt das zweite Armteil 18 ist über das erste Armteil 17 geschoben. Sowohl die Klemmeinheit 20 als auch die Injektionseinheit 19 sind geöffnet, befinden sich also in dem in den Fig. 3 bis 7 dargestellten Zustand.

Im Zuge der anhaltenden Bewegung der fahrbaren Einheit 2 gelangt eine Pflanze 24 in den Wirkungsbereich des Injektionsarms 16. Dies wird von der Sensoreinheit S1 registriert und ein entsprechendes Signal an die elektronische Steuerungseinheit SE übermittelt. Die Steuerungseinheit SE bewirkt dann, dass der Laufwagen 9 von dem Antrieb 13 entgegen der Fahrtrichtung 3 mit einer dem Betrag der Fahrgeschwindigkeit entsprechenden Geschwindigkeit entlang der Linearführung bewegt wird. Gleichzeitig veranlasst die Steuerungseinheit SE das Ausfahren des Injektionsarms 16 durch Aktivieren der Vorschubeinrichtung (Zylinderkolbeneinheit 22) bis der Zentrierarm 41 mit der darauf angeordneten Sensoreinheit S2 am Stamm der Pflanze 24 anschlägt. Daraufhin generiert die Sensoreinheit S2 ein Signal und übermittelt dieses an die Steuerungseinheit SE.

Sodann gibt die Steuerungseinheit SE Steuerungssignale aus, um die Vorschubeinrichtung durch Öffnen der Hydraulikventile drucklos zu schalten und die Klemmeinrichtung 20 zu schließen. Letzteres geschieht durch Aktivieren des Aktors 30, worauf die beiden Zentrierarme 26 um das Schwenklager 25 in Richtung der Pflanze 24 bewegt werden bis die Klemmflächen 28 den Stamm der Pflanze 24 klemmen. Durch die Zwangsführung der Zentrierplatte 36 mit Langlöchern 37 an den Führungszapfen 35 der Zentrierarmen 26 und der Längsführung des Stegs 38 zwischen den Nutleisten 39 wird eine exakt mittig zwischen den Klemmklötzen 27 erfolgende Klemmung der Pflanze 24 unabhängig vom Durchmesser ihres Stammes erreicht.

Nach Herstellen der Klemmverbindung wird der Antrieb 13 für den Laufwagen 9 von der Steuerungseinheit SE kraftlos geschaltet. Die Kraft zur weiteren Bewegung des Laufwagens 9 entlang der Linearführung kommt nun vom Widerstand der im Untergrund verwurzelten Pflanze 24, die über den Injektionsarm 16 auf den Laufwagen 9 übertragen wird, während die fahrbare Einheit 2 mit vorbestimmter Geschwindigkeit weiter fährt.

Gleichzeitig startet die Steuerungseinheit SE den Injektionsvorgang, indem die Eindrückarme 43 durch Ansteuerung des Aktors 53 um die Schwenklager 44 bewegt werden, wobei die Injektionsnadeln 45 in die Gefäßbahnen der Pflanze 24 eindringen. Durch anschließende Druckbeaufschlagung der Injektionsnadeln 45, beispielsweise durch Aktivierung einer Dosierpumpe, wird der Wirkstoff in vorbestimmter Menge in die Gefäßbahnen injiziert. Dabei fährt der Laufwagen 9 aufgrund der anhaltenden Bewegung der fahrbaren Einheit 2 weiter in Richtung des hinteren Endes des Tragrahmens 5. Nach abgeschlossener Injektion öffnet die Steuerungseinheit SE die beiden Eindrückarm 43, bis diese an den Anschlagelementen 52 anschlagen.

Anschließend veranlasst die Steuerungseinheit SE das Lösen der Klemmeinheit 20 und Einfahren des Injektionsarmes 16. Sodann wird von der Steuerungseinheit SE der Antrieb 13 aktiviert, um den Laufwagen 9 mit Injektionsarm 16 in die vordere Ausgangsstellung für den nächsten Arbeitszyklus zu bringen. Während des gesamten Zyklus bewegt sich die fahrbare Einheit 2 ohne anzuhalten.

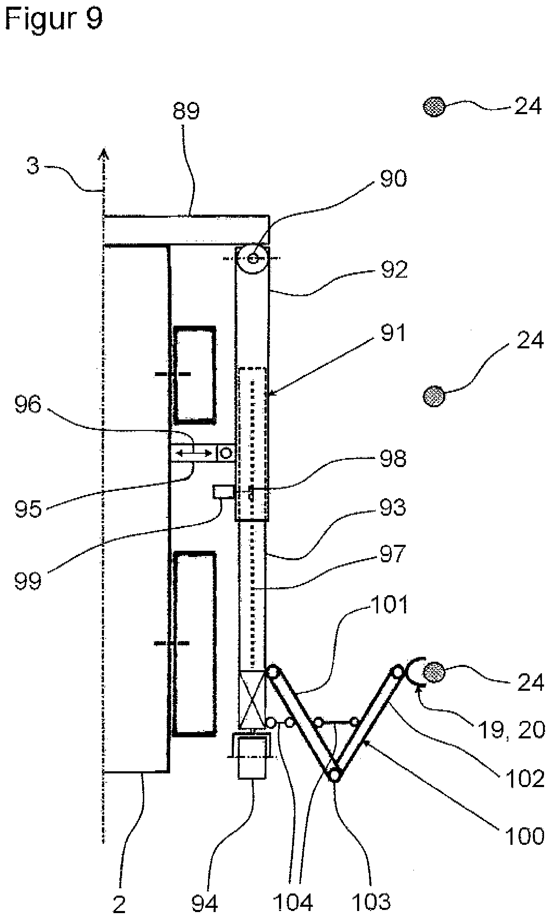

Fig. 9 zeigt in schematischer Darstellung eine Draufsicht auf eine weitere Ausführungsform der Erfindung. An der fahrbaren Einheit 2, von der aus Gründen der Symmetrie nur die in Fahrtrichtung 3 rechte Hälfte dargestellt ist, ist vorne eine Traverse 89 starr befestigt. Das Ende der Traverse 89 ragt seitlich über die fahrbare Einheit 2 hinaus und trägt dort ein Kreuzgelenk 90 zum gelenkigen Anschluss einer in etwa parallel zur Fahrtrichtung 3 verlaufenden Linearführung 91. Die Linearführung 91 umfasst ein hohlzylindrisches Führungsprofil 92, das mit seinem einen Ende an das Kreuzgelenk 90 anschließt. Vom anderen Ende her ist in das Führungsprofil 92 ein ebenfalls zur Linearführung 91 gehörender hohlzylindrischer Profilbalken 93 eingeschoben, dessen außerhalb des Führungsprofils 92 liegendes Ende mit einem am Untergrund abrollenden Stützrad 94 verbunden ist. Über linear wirkende Aktoren 95 zwischen fahrbarer Einheit 2 und Linearführung 91 kann die Linearführung 91 um das Kreuzgelenk 90 seitlich in Richtung des Pfeils 96 verschwenkt und/oder vom Untergrund angehoben werden.

Zur linearen Verstellung des Profilbalkens 93 innerhalb des Führungsprofils 92 ist an der Unterseite des Profilbalkens 93 eine Zahnstange 97 angeordnet, mit der das Antriebsritzel 98 eines Motors 99 in Eingriff steht. Durch entsprechende Ansteuerung des Motors 99 kann der Profilbalken 93 in das Führungsprofil 92 ein- bzw. aus diesem ausgefahren werden oder der Motor 99 kann kraftlos geschalten werden, so dass der Profilbalken 93 durch äußere Krafteinwirkung im Führungsprofil 92 verstellbar ist.

Am äußeren Ende des Profilbalkens 93 ist ein Injektionsarm 100 befestigt, der im vorliegenden Ausführungsbeispiel ein erstes Armteil 101 und ein zweites Armteil 102 besitzt, die über ein Schwenkgelenk 103 miteinander verbunden sind. Das erste Armteil 101 ist am Profilbalken 93 angelenkt, das zweite trägt die Injektionseinheit 19 und Klemmeinheit 20, die entsprechend der Fig. 3 bis 8 ausgebildet sein können oder in Form einer kombinierten Injektions- und Klemmeinheit. Für den Wechsel zwischen der ersten Position und zweiten Position besitzt der Injektionsarm 100 Verstellmittel 104 wie zum Beispiel einen hydraulischen oder elektromechanischen Antrieb, insbesondere Zylinderkolbeneinheiten oder Spindeltriebe, um durch Aufschwenken der beiden Armteile 101, 102 die Injektionseinheit 19 einer Pflanze 24 anzunähern bzw. durch Zusammenschwenken der beiden Armteile 101, 102 eine Pflanze 24 freizugeben, um dann die Injektionseinheit 19 zur nächsten Pflanze 24 umzusetzen zu können.

Die Arbeitsweise der Vorrichtung entspricht sinngemäß der in Verbindung mit den Fig. 1 bis 8 beschriebenen, so dass dort Gesagte entsprechend gilt.

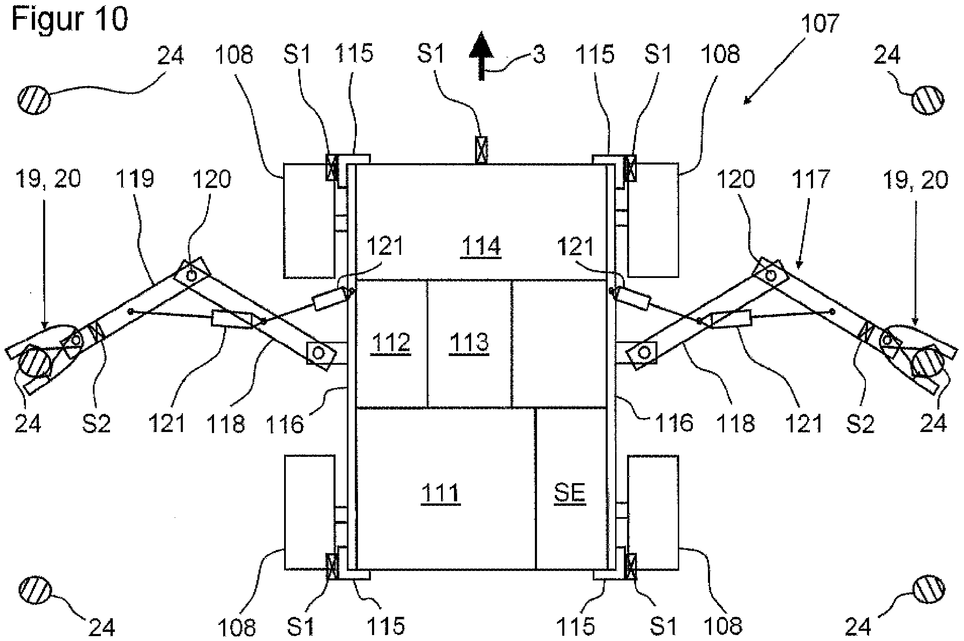

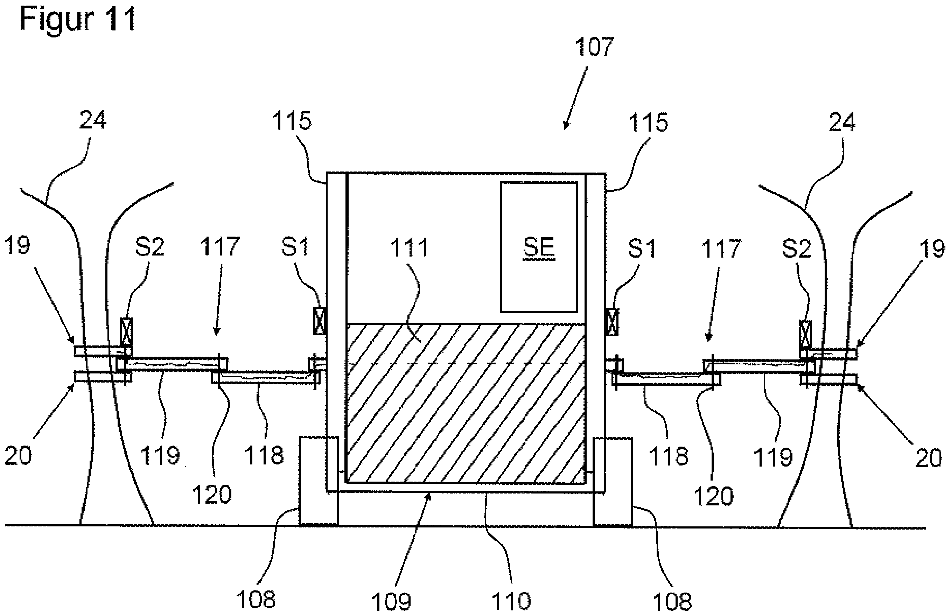

Gegenstand der Fig. 10 und 11 ist eine Ausführungsform der Erfindung, bei der ein völlig autonom arbeitender Injektionsroboter 107 die Injektion an den Pflanzen 24 vornimmt. Dabei fährt der Injektionsroboter 107 zu Beginn eines Arbeitszyklus, vorzugsweise GPS-gesteuert, in den Bereich der nächsten zu behandelnden Pflanze 24 und unterbricht die Fahrt für die Dauer der Injektion.

Der Injektionsroboter 107 umfasst eine fahrbare Einheit 2 mit Rädern 108 und einem Fahrzeugrahmen 109, die elektrisch oder von einem Verbrennungsmotor angetrieben ist. Der Fahrzeugrahmen 109 besitzt als tragende Elemente einen Boden 110 und Eckprofile 115. Die fahrbare Einheit 2 nimmt einen ersten Behälter 111 für die Injektionsflüssigkeit, einen zweiten Behälter 112 für eine Desinfektionsflüssigkeit, einen dritten Behälter 113 für eine Schutzflüssigkeit und einen vierten Behälter 114 für ein Hydrauliköl auf. Zudem sind in der fahrbaren Einheit 2 Schlauchleitungen von den einzelnen Behältern 111, 112, 113, 114 zu den jeweiligen Verbrauchsstellen (Injektionsnadel 45, Düse 105 für Desinfektionsflüssigkeit, Düse 106 für Schutzflüssigkeit, Verstellmittel 104, 121) sowie Pumpen zur Förderung der einzelnen Flüssigkeiten untergebracht. Ferner führt die fahrbare Einheit 2 eine zentrale Steuerungseinheit SE mit sich, sowie an den Seiten vorne und hinten sowie mittig vorne jeweils eine Sensoreinheit S1, die im Wesentlichen den bereits unter den Fig. 1 bis 9 beschriebenen entsprechen.

In die beiden Seiten der fahrbaren Einheit 2 ist jeweils ein Grundrahmen 116 integriert, der zur Montage eines Injektionsarms 117 dient. Der Injektionsarm 117 umfasst ein erstes Armteil 118 und ein zweites Armteil 119, die über ein Schwenkgelenk 120 miteinander verbunden sind. Das erste Armteil 118 ist an dem Grundrahmen 116 angelenkt, das zweite Armteil 119 trägt die Injektionseinheit 19 und Klemmeinheit 20, die entsprechend der Fig. 3 bis 8 ausgebildet sein können, so dass das dort Gesagte entsprechend gilt. Für den Wechsel zwischen der ersten Position und zweiten Position besitzt der Injektionsarm 117 Verstellmittel 121, beispielsweise in Form linear wirkender hydraulischer oder elektromechanischer Antriebe, um durch Zusammenschwenken der beiden Armteile 118, 119 eine Pflanze 24 freigeben zu können (erste Position) bzw. durch Aufschwenken der beiden Armteile 118, 119 die Injektionseinheit 19 und Klemmeinheit 20 einer Pflanze 24 annähern zu können (zweite Position).

Im Betrieb fährt der erfindungsgemäße Injektionsroboter 107 völlig autonom, vorzugsweise GPS-gesteuert, von einer bereits behandelten Pflanze 24 zur nächsten zu behandelnden Pflanze 24, wobei sich der Injektionsarm 117 in der ersten Position befindet, das erste Armteil 118 und zweite Armteil 119 also mit Hilfe der Verstellmittel 121 zusammengeschwenkt sind. Mittels der Sensoren S1 werden während der Umsetzfahrt die Bereiche vor und seitlich des Injektionsroboters 107 untersucht und die in den Messbereich gelangenden Pflanzen 24 erfasst.

Nach Erreichen einer für die Injektion geeigneten relativen Position des Injektionsroboters 107 gegenüber der als nächstes zu behandelnden Pflanze 24 wird die Fahrt gestoppt. Durch Aktivieren der Verstellmittel 121 werden das erste Armteil 118 und zweite Armteil 119 auseinander geschwenkt und so der Injektionsarm 117 mit Injektionseinheit 19 und Klemmeinheit 20 in die zweite Position gefahren, in der die Injektion erfolgt. Die Annäherungsbewegung wird durch die Sensoreinheit S2 am Injektionsarm 117 kontrolliert und gegebenenfalls von der Steuereinheit SE korrigiert.

Nach Erreichen der Injektionsposition wird durch Aktivieren der Klemmeinheit 20 die Injektionseinheit 19 in ihrer Lage gegenüber der Pflanze 24 fixiert. Der Injektionsvorgang läuft in drei Phasen ab, wobei zunächst mit Hilfe der Düsen 105 eine Desinfektionsflüssigkeit auf die Injektionsstelle aufgesprüht wird, dann der Wirkstoff mit Hilfe der Injektionseinheit 19 wie bereits beschrieben injiziert wird und schließlich mittels der Düsen 106 eine Schutzflüssigkeit zum Versiegeln der Injektionsstelle wie zum Beispiel Wachs auf die Injektionsstelle aufgebracht wird.

Nach Lösen der Klemmeinheit 20 wird der Injektionsarm 117 von den Verstellmitteln 121 zurück in die erste Position gefahren. Anschließend beginnt mit der Fahrt des Injektionsroboters 107 zur nächsten Pflanze 24 ein neuer Injektionszyklus. Die Steuereinheit SE steuert dabei die für die Injektion notwendigen Vorgänge eines Zyklus unter Verwendung der von den Sensoreinheiten S1 und S2 ermittelten Daten.

## Patentansprüche

1. Vorrichtung zum Injizieren flüssiger Wirkstoffe in die Gefäßbahnen verholzter Pflanzen (24), mit einer Injektionseinheit (19; 55) mit mindestens einer Injektionsnadel (45; 79), die in eine Gefäßbahn einbringbar ist und durch welche die Wirkstoffe der Pflanze (24) zuführbar sind, und mit
- einer in Fahrtrichtung (3) fahrbaren Einheit (2) zum Umsetzen der Injektionseinheit (19; 55) von Pflanze (24) zu Pflanze (24), und mit
- einem Injektionsarm (16; 100), der mit seinem ersten Ende an der fahrbaren Einheit (2) befestigt ist und an dessen zweitem Ende die Injektionseinheit (19; 55) angeordnet ist,
- wobei der Injektionsarm (16; 100) Verstellmittel aufweist, mit der ein Wechsel der Injektionseinheit (19; 55) zwischen einer ersten Position zum Umsetzen der Injektionseinheit (19; 55) von Pflanze (24) zu Pflanze (24) und einer zweiten Position zum Injizieren der Wirkstoffe in die Gefäßbahnen einer verholzten Pflanze (24) durchführbar ist, **dadurch gekennzeichnet, dass**
- die Verstellmittel quer zur Fahrtrichtung (3) wirken, und
- zur Bedienung der Verstellmittel eine Steuerungseinheit (SE) und Sensoren (S1, S2) vorgesehen sind, wobei
- die Sensoren (S1, S2) dazu ausgebildet sind, die relative Lage der zu behandelnden Pflanze (24) gegenüber der fahrbaren Einheit (2) zu erfassen und die dabei erzeugten Signale an die Steuerungseinheit (SE) zu übermitteln, und
- die Steuerungseinheit (SE) dazu ausgebildet ist, im Zuge der Verarbeitung der empfangenen Signale Steuerungssignale an die Verstellmittel auszugeben.

2. Vorrichtung nach Anspruch 1, **dadurch gekennzeichnet, dass** der Injektionsarm (16; 100) mindestens zweiteilig ausgebildet ist mit einem ersten Armteil (17; 101), an dem das erste Ende angeordnet ist, und einem zweiten Armteil (18; 102), an dem das zweite Ende angeordnet ist, wobei erstes Armteil (17; 101) und zweites Armteil (18; 102) zum Wechsel zwischen der ersten Position und zweiten Position mit Hilfe der Verstellmittel gegeneinander verschiebbar und/oder verschwenkbar sind.

3. Vorrichtung nach Anspruch 2, **dadurch gekennzeichnet, dass** das erste Armteil (17) und/oder das zweite Armteil (18) hohlzylindrische Gestalt besitzen und teleskopierbar ausgebildet sind, wobei vorzugsweise das erste Armteil (17) in das zweite Armteil (18) einschiebbar ist, oder das erste Armteil (101) und das zweite Armteil (102) jeweils stabförmige Gestalt besitzen und über ein Gelenk (103) miteinander verbunden sind.

4. Vorrichtung nach einem der Ansprüche 1 bis 3, **dadurch gekennzeichnet, dass** die Verstellmittel mindestens einen hydraulischen oder elektromechanischen Aktor umfassen, vorzugsweise von einer Zylinderkolbeneinheit (22) oder einen Spindeltrieb (104) gebildet sind.

5. Vorrichtung nach einem der Ansprüche 1 bis 4, **dadurch gekennzeichnet, dass** die Vorrichtung (1) zur Lagerung des Injektionsarms (16; 100) an der fahrbaren Einheit (2) eine Linearführung besitzt, mit mindestens einem Führungsprofil (7, 8; 92), das an der fahrbaren Einheit (2) befestigt sind, und mit einem Läufer, der entlang des mindestens einen Führungsprofils (7, 8; 92) linear verschieblich gelagert und mittels eines Antriebs (13; 99) verstellbar ist, wobei der Injektionsarm (16; 100) mit seinem ersten Ende an dem Läufer befestigt ist.

6. Vorrichtung nach Anspruch 5, **dadurch gekennzeichnet, dass** der Läufer von einem Wagen (9) oder Schlitten gebildet ist und die Linearführung mehrere einen Rahmen bildende Führungsprofile (7, 8) umfasst, auf denen der Wagen (9) verstellbar ist.

7. Vorrichtung nach Anspruch 5, **dadurch gekennzeichnet, dass** der Läufer einen Profilbalken (93) umfasst, der entlang des mindestens einen Führungsprofils (92) verstellbar ist, vorzugsweise in das mindestens eine Führungsprofil (92) einschiebbar ist.

8. Vorrichtung nach einem der Ansprüche 5 bis 7, **dadurch gekennzeichnet, dass** die Linearführung (91) an ihrem einen Ende ein Gelenk (90) besitzt, vorzugsweise ein Kreuzgelenk, mit dem die Linearführung (91) an der fahrbaren Einheit (2) befestigt ist, und an ihrem anderen Ende ein Stützrad (94), mit dem die Linearführung (91) am Untergrund abrollt.

9. Vorrichtung nach einem der Ansprüche 1 bis 8, **dadurch gekennzeichnet, dass** die Injektionseinheit (19; 55) mindestens einen Eindrückarm (43) oder Injektionsbolzen (61) besitzt, an dessen Ende eine Injektionsnadel (45; 79) angeordnet ist, und der mindestens einen Eindrückarm (43) oder Injektionsbolzen (61) zur Penetration der Injektionsnadel (45; 79) in die Pflanze (24) mittels einer Antriebseinrichtung bewegbar ist.

10. Vorrichtung nach Anspruch 9, **dadurch gekennzeichnet, dass** der mindestens eine Eindrückarm (43) schwenkbar am Injektionsarm (16) gelagert ist und die Antriebseinrichtung einen Aktor umfasst, mit dem der mindestens eine Eindrückarm (43) gegen die Pflanze (24) bewegbar ist.

11. Vorrichtung nach Anspruch 9, **dadurch gekennzeichnet, dass** der mindestens eine Injektionsbolzen (61) linear verschieblich gelagert ist und die Antriebseinrichtung ein vorgespanntes Federelement (86) umfasst, mit dem der Injektionsbolzen (61) gegen die Pflanze (24) beschleunigbar ist.

12. Vorrichtung nach einem der Ansprüche 1 bis 11, **dadurch gekennzeichnet, dass** am zweiten Ende des Injektionsarms (16) eine Klemmvorrichtung (20) zur Fixierung der Pflanze (24) während des Injizierens angeordnet ist.

13. Vorrichtung nach Anspruch 12, **dadurch gekennzeichnet, dass** die Klemmvorrichtung (20) mindestens einen Zentrierarm (26) mit Klemmfläche (28) besitzt, der unter Klemmung der Pflanze (24) gegen eine zweite Klemmfläche (28, 42) bewegbar ist, wobei vorzugsweise die zweite Klemmfläche (28) Teil eines zweiten Zentrierarms (26) ist.

14. Vorrichtung nach Anspruch 12 oder 13, **dadurch gekennzeichnet, dass** der mindestens eine Zentrierarm (26) und/oder zweite Zentrierarm (26) mittels eines Schwenklagers (25) am zweiten Ende des Injektionsarms (16) gelagert sind/ist.

15. Vorrichtung nach einem der Ansprüche 12 bis 14, **gekennzeichnet durch** einen dritten Zentrierarm (41) mit Klemmfläche (42), der linear in Richtung der Längsachse des Injektionsarms (16) verschieblich ist.

16. Vorrichtung nach Anspruch 15, **dadurch gekennzeichnet dass** alle Zentrierarme (26, 41) mit Synchronisationsmittel zusammenwirken, so dass in der zweiten Position der Abstand aller Klemmflächen (28, 42) zur Pflanze (24) identisch ist.

17. Verfahren zum Injizieren flüssiger Wirkstoffe in die Gefäßbahnen verholzter Pflanzen, wobei eine Injektionseinheit (19; 55) mittels einer in Fahrtrichtung (3) fahrbaren Einheit (2) von einer Pflanze (24) zu einer nächsten Pflanze (24) einer Pflanzenreihe umgesetzt und anschließend der Wirkstoff injiziert wird, **dadurch gekennzeichnet, dass**
- die Injektionseinheit (19; 55) quer zur Fahrtrichtung (3) von einer ersten Position zum Umsetzen der Injektionseinheit (19; 55) von Pflanze (24) zu Pflanze (24) in eine zweite Position zum Injizieren der Wirkstoffe in die Gefäßbahnen einer verholzten Pflanze (24) gebracht wird, wobei
- mittels Sensoren (S1, S2) die relative Lage der zu behandelnden Pflanze (24) gegenüber der fahrbaren Einheit (2) erfasst wird und die dabei erzeugten Signale an eine Steuerungseinheit (SE) übermittelt werden, und
- die Steuerungseinheit (SE) im Zuge der Verarbeitung der empfangenen Signale Steuerungssignale an die Verstellmittel ausgibt. ,

18. Verfahren nach Anspruch 17, **dadurch gekennzeichnet, dass**
- sich die fahrbare Einheit (2) kontinuierlich mit vorbestimmter Geschwindigkeit und Richtung entlang der Pflanzen (24) der Pflanzenreihe bewegt,
- wobei die Injektionseinheit (19; 55) während des Injizierens des Wirkstoffs gegenüber der fahrbaren Einheit (2) mit deren Geschwindigkeit aber entgegen deren Richtung bewegt wird.

19. Verfahren nach Anspruch 17 oder 18, **dadurch gekennzeichnet, dass** vor der Injektion des Wirkstoffs ein Desinfektionsmittel auf die Injektionsstelle aufgebracht wird und/oder nach der Injektion des Wirkstoffs ein Schutzmittel auf die Injektionsstelle.

## Claims

1. Device for injecting liquid active substances into the vessels of woody plants (24), comprising an injection unit (19; 55) with at least one injection needle (45; 79) which can be introduced into a vessel and through which the active substances can be fed to the plant (24), and comprising
- a unit (2) which is displaceable in the direction of travel (3) for moving the injection unit (19; 55) from plant (24) to plant (24), and comprising
- an injection arm (16; 100) which is fastened at its first end to the displaceable unit (2) and at the second end of which the injection unit (19; 55) is arranged,
- the injection arm (16; 100) having adjusting means with which a change of the injection unit (19; 55) between a first position for moving the injection unit (19; 55) of plant (24) to plant (24) and a second position for injecting the active substances into the vessels of a woody plant (24) can be carried out, **characterized in that**
- the adjusting means act transversely to the direction of travel (3), and
- a control unit (SE) and sensors (S1, S2) are provided for operating the adjusting means,
- the sensors (S1, S2) being designed to detect the relative position of the plant (24) to be treated relative to the displaceable unit (2) and to transmit the signals generated in the process to the control unit (SE), and
- the control unit (SE) being designed to output control signals to the adjusting means in the course of processing the received signals.

2. Device according to claim 1, **characterized in that** the injection arm (16; 100) is formed in at least two parts, with a first arm part (17; 101), on which the first end is arranged, and a second arm part (18; 102), on which the second end is arranged, the first arm part (17; 101) and the second arm part (18; 102) being displaceable and/or pivotable relative to one another by means of the adjusting means for changing between the first position and the second position.

3. Device according to claim 2, **characterized in that** the first arm part (17) and/or the second arm part (18) have a hollow cylindrical shape and are telescopic, the first arm part (17) preferably being insertable into the second arm part (18), or the first arm part (101) and the second arm part (102) each being rod-shaped and being connected to one another via a joint (103).

4. Device according to any of claims 1 to 3, **characterized in that** the adjusting means comprise at least one hydraulic or electromechanical actuator, preferably formed by a cylinder piston unit (22) or a spindle drive (104).

5. Device according to any of claims 1 to 4, **characterized in that** the device (1) has a linear guide on the displaceable unit (2) for mounting the injection arm (16; 100), the linear guide having at least one guide profile (7, 8; 92) which is fastened to the displaceable unit (2), and having a runner which is mounted so as to be linearly displaceable along the at least one guide profile (7, 8; 92) and can be adjusted by means of a drive (13; 99), the injection arm (16; 100) being fastened at its first end to the runner.

6. Device according to claim 5, **characterized in that** the runner is formed by a carriage (9) or a slide and the linear guide comprises a plurality of guide profiles (7, 8) forming a frame, on which guide profiles the carriage (9) can be moved.

7. Device according to claim 5, **characterized in that** the runner comprises a profile bar (93) which can be moved along the at least one guide profile (92), preferably is insertable into the at least one guide profile (92).

8. Device according to any of claims 5 to 7, **characterized in that** the linear guide (91) has, at one end, a joint (90), preferably a universal joint, with which the linear guide (91) is fastened to the displaceable unit (2) and, at the other end, a support wheel (94), with which the linear guide (91) rolls on the ground.

9. Device according to any of claims 1 to 8, **characterized in that** the injection unit (19; 55) has at least one push-in arm (43) or injection bolt (61), on the end of which an injection needle (45; 79) is arranged, and the at least one push-in arm (43) or injection bolt (61) can be moved by means of a drive device for the penetration of the injection needle (45; 79) into the plant (24).

10. Device according to claim 9, **characterized in that** the at least one push-in arm (43) is pivotably mounted on the injection arm (16) and the drive device comprises an actuator with which the at least one push-in arm (43) can be moved against the plant (24).

11. Device according to claim 9, **characterized in that** the at least one injection bolt (61) is mounted linearly displaceably and the drive device comprises a prestressed spring element (86) by means of which the injection bolt (61) can be accelerated against the plant (24).

12. Device according to any of claims 1 to 11, **characterized in that** a clamping device (20) for fixing the plant (24) during the injection is arranged at the second end of the injection arm (16).

13. Device according to claim 12, **characterized in that** the clamping device (20) has at least one centering arm (26) with a clamping surface (28), which centering arm can be moved against a second clamping surface (28, 42) in order to clamp the plant (24), the second clamping surface (28) preferably being part of a second centering arm (26).

14. Device according to either claim 12 or claim 13, **characterized in that** the at least one centering arm (26) and/or second centering arm (26) are/is mounted at the second end of the injection arm (16) by means of a pivot bearing (25).

15. Device according to any of claims 12 to 14, **characterized by** a third centering arm (41) with a clamping surface (42), which centering arm is linearly displaceable in the direction of the longitudinal axis of the injection arm (16).

16. Device according to claim 15, **characterized in that** all the centering arms (26, 41) interact with synchronization means, so that in the second position the distance of all the clamping surfaces (28, 42) to the plant (24) is identical.

17. Method for injecting liquid active substances into the vessels of woody plants, an injection unit (19; 55) being moved from a plant (24) to a next plant (24) of a plant row by means of a unit (2) which is displaceable in the direction of travel (3) and the active substance subsequently being injected, **characterized in that**
- the injection unit (19; 55) is brought transversely to the direction of travel (3) from a first position for moving the injection unit (19; 55) from plant (24) to plant (24) into a second position for injecting the active ingredients into the vessels of a woody plant (24),
- the position of the plant (24) to be treated relative to the displaceable unit (2) being detected by means of sensors (S1, S2), and the signals generated in the process being transmitted to a control unit (SE), and
- the control unit (SE) outputting control signals to the adjusting means in the course of processing the received signals.

18. Method according to claim 17, **characterized in that**
- the displaceable unit (2) moves continuously at predetermined speed and direction along the plants (24) of the row of plants,
- the injection unit (19; 55) being moved during the injection of the active ingredient relative to the displaceable unit (2) at the speed thereof but counter to the direction thereof.

19. Method according to either claim 17 or claim 18, **characterized in that** before the injection of the active substance, a disinfectant is applied to the injection site and/or after the injection of the active substance, a protective agent is applied to the injection site.

## Revendications

1. Dispositif permettant d'injecter des principes actifs liquides dans les voies vasculaires de plantes ligneuses (24), comportant une unité d'injection (19 ; 55) comportant au moins une aiguille d'injection (45 ; 79) pouvant être introduite dans une voie vasculaire et à travers laquelle les principes actifs peuvent être acheminés à la plante (24), et comportant
- une unité (2) mobile dans le sens de déplacement (3) et permettant de transférer l'unité d'injection (19 ; 55) d'une plante (24) à une autre plante (24), et comportant
- un bras d'injection (16 ; 100) fixé à l'unité mobile (2) avec sa première extrémité et à la seconde extrémité duquel est disposée l'unité d'injection (19 ; 55),
- dans lequel le bras d'injection (16 ; 100) présente des moyens de réglage avec lesquels un changement de l'unité d'injection (19 ; 55) entre une première position permettant de transférer l'unité d'injection (19 ; 55) d'une plante (24) à une autre plante (24) et une seconde position permettant d'injecter les principes actifs dans les voies vasculaires d'une plante ligneuse (24) peut être réalisé, **caractérisé en ce que**
- les moyens de réglage agissent transversalement au sens de déplacement (3),
- une unité de commande (SE) et des capteurs (S1, S2) sont prévus pour la manipulation des moyens de réglage,
- les capteurs (S1, S2) étant configurés pour détecter la position relative de la plante (24) à traiter par rapport à l'unité mobile (2) et pour transmettre les signaux ainsi produits à l'unité de commande (SE), et
- l'unité de commande (SE) étant configurée pour envoyer des signaux de commande aux moyens de réglage lors du traitement des signaux reçus.

2. Dispositif selon la revendication 1, **caractérisé en ce que** le bras d'injection (16 ; 100) est conçu au moins en deux parties avec une première partie de bras (17 ; 101) au niveau de laquelle est disposée la première extrémité et une seconde partie de bras (18 ; 102) au niveau de laquelle est disposée la seconde extrémité, la première partie de bras (17 ; 101) et la seconde partie de bras (18 ; 102) pouvant être déplacées et/ou pivotées l'une par rapport à l'autre à l'aide des moyens de réglage pour le changement entre la première position et la seconde position.

3. Dispositif selon la revendication 2, **caractérisé en ce que** la première partie de bras (17) et/ou la seconde partie de bras (18) possèdent une forme de cylindre creux et sont conçues de manière à être télescopiques, de préférence la première partie de bras (17) pouvant être insérée dans la seconde partie de bras (18) ou la première partie de bras (101) et la seconde partie de bras (102) possédant respectivement une forme de tige et étant reliées entre elles par l'intermédiaire d'une articulation (103).

4. Dispositif selon l'une des revendications 1 à 3, **caractérisé en ce que** les moyens de réglage comprennent au moins un actionneur hydraulique ou électromécanique, de préférence sont formés par une unité piston-cylindre (22) ou un mécanisme à broche (104).

5. Dispositif selon l'une des revendications 1 à 4, **caractérisé en ce que** le dispositif (1) permettant le support du bras d'injection (16 ; 100) sur l'unité mobile (2) possède un guidage linéaire, comportant au moins un profilé de guidage (7, 8 ; 92), lequel est fixé sur l'unité mobile (2), et comportant un rotor, lequel est monté de manière à pouvoir coulisser linéairement le long de l'au moins un profilé de guidage (7, 8 ; 92) et peut être réglé au moyen d'un entraînement (13 ; 99), le bras d'injection (16 ; 100) étant fixé sur le rotor avec sa première extrémité.

6. Dispositif selon la revendication 5, **caractérisé en ce que** le rotor est formé par un chariot (9) ou un coulisseau et le guidage linéaire comprend plusieurs profilés de guidage (7, 8) formant un cadre et sur lesquels le chariot (9) peut être réglé.

7. Dispositif selon la revendication 5, **caractérisé en ce que** le rotor comprend une poutre profilée (93) qui peut être réglée le long de l'au moins un profilé de guidage (92), de préférence peut être insérée dans l'au moins un profilé de guidage (92).

8. Dispositif selon l'une des revendications 5 à 7, **caractérisé en ce que** le guidage linéaire (91) possède, au niveau de son extrémité, une articulation (90), de préférence un joint universel, avec laquelle le guidage linéaire (91) est fixé sur l'unité mobile (2) et possède, au niveau de son autre extrémité, une roue d'appui (94) avec laquelle le guidage linéaire (91) roule sur le sol.

9. Dispositif selon l'une des revendications 1 à 8, **caractérisé en ce que** l'unité d'injection (19 ; 55) possède au moins un bras de poinçonnement (43) ou boulon d'injection (61), à l'extrémité duquel est disposée une aiguille d'injection (45 ; 79), et l'au moins un bras de poinçonnement (43) ou boulon d'injection (61) peut être déplacé dans la plante (24) au moyen d'un appareil d'entraînement pour la pénétration de l'aiguille d'injection (45 ; 79).

10. Dispositif selon la revendication 9, **caractérisé en ce que** l'au moins un bras de poinçonnement (43) est monté de manière à pouvoir pivoter sur le bras d'injection (16) et l'appareil d'entraînement comprend un actionneur avec lequel l'au moins un bras de poinçonnement (43) peut être déplacé contre la plante (24).

11. Dispositif selon la revendication 9, **caractérisé en ce que** l'au moins un boulon d'injection (61) est monté de manière à pouvoir coulisser linéairement et l'appareil d'entraînement comprend un élément de ressort précontraint (86) avec lequel le boulon d'injection (61) peut être accéléré contre la plante (24).

12. Dispositif selon l'une des revendications 1 à 11, **caractérisé en ce qu'**un dispositif de serrage (20) permettant de fixer la plante (24) pendant l'injection est disposé au niveau de la seconde extrémité du bras d'injection (16).

13. Dispositif selon la revendication 12, **caractérisé en ce que** le dispositif de serrage (20) possède au moins un bras de centrage (26) comportant une surface de serrage (28) et pouvant être déplacé contre une seconde surface de serrage (28, 42) en serrant la plante (24), de préférence la seconde surface de serrage (28) faisant partie d'un deuxième bras de centrage (26).

14. Dispositif selon la revendication 12 ou 13, **caractérisé en ce que** l'au moins un bras de centrage (26) et/ou le deuxième bras de centrage (26) sont montés au niveau de la seconde extrémité du bras d'injection (16) au moyen d'un palier de pivotement (25).

15. Dispositif selon l'une des revendications 12 à 14, **caractérisé par** un troisième bras de centrage (41) comportant une surface de serrage (42), lequel peut coulisser linéairement en direction de l'axe longitudinal du bras d'injection (16).

16. Dispositif selon la revendication 15, **caractérisé en ce que** tous les bras de centrage (26, 41) coopèrent avec des moyens de synchronisation, de sorte que, dans la seconde position, les distances entre toutes les surfaces de serrage (28, 42) et la plante (24) sont identiques.

17. Procédé permettant d'injecter des principes actifs liquides dans les voies vasculaires de plantes ligneuses, dans lequel une unité d'injection (19 ; 55) est transférée d'une plante (24) à une plante suivante (24) d'une rangée de plantes au moyen d'une unité (2) mobile dans le sens de déplacement (3), puis le principe actif est injecté, **caractérisé en ce que**
- l'unité d'injection (19 ; 55) est amenée transversalement au sens de déplacement (3) d'une première position permettant de transférer l'unité d'injection (19 ; 55) d'une plante (24) à une autre plante (24) vers une seconde position permettant d'injecter les principes actifs dans les voies vasculaires d'une plante ligneuse (24),
- la position relative de la plante (24) à traiter par rapport à l'unité mobile (2) étant détectée au moyen de capteurs (S1, S2) et les signaux ainsi produits étant transmis à une unité de commande (SE), et
- l'unité de commande (SE) envoyant des signaux de commande aux moyens de réglage lors du traitement des signaux reçus.

18. Procédé selon la revendication 17, **caractérisé en ce que**
- l'unité mobile (2) se déplace en continu à une vitesse et dans une direction prédéterminées le long des plantes (24) de la rangée de plantes,
- l'unité d'injection (19 ; 55) étant déplacée pendant l'injection du principe actif par rapport à l'unité mobile (2) en suivant sa vitesse mais dans la direction opposée à celle-ci.

19. Procédé selon la revendication 17 ou 18, **caractérisé en ce qu'**un agent désinfectant est appliqué sur le site d'injection avant l'injection du principe actif et/ou un agent protecteur sur le site d'injection après l'injection du principe actif.
